# EUROPEAN PATENT SPECIFICATION

(11) **EP 1 305 189 B1**
(45) Date of publication and mention of the grant of the patent: **21.12.2011**
(21) Application number: 01953704.2
(22) Date of filing: 31.07.2001
(51) Int. Cl.: B60R 13/02, B29C 41/00

(54) **METHOD FOR MANUFACTURING AN AUTOMOTIVE TRIM PART**
VERFAHREN ZUM ERZEUGEN EINES KRAFTFAHRZEUG-INNENAUSSTATTUNGSELEMENTS
PROCEDE DE FABRICATION D'UN ELEMENT DE GARNISSAGE POUR AUTOMOBILE

(30) Priority: 01.08.2000 EP 00870171
(43) Date of publication of application: 02.05.2003
(60) Divisional application: 08103839.0
(73) Proprietor: RECTICEL Automobilsysteme GmbH, 53619 Rheinbreitbach (DE)
(72) Inventor: DE WINTER, Hugo, 9230 Wetteren (BE); WILLEMS, Jan, 9230 Wetteren (BE)
(74) Representative: Van Reet, Joseph
(86) International application number: PCT/BE2001/000124
(87) International publication number: WO 2002/009977

(56) References cited:
- EP-B- 0 303 305
- EP-B- 0 379 246
- EP-B- 0 642 411
- WO-A-95/32850
- WO-A-98/14492
- DE-U- 29 503 709
- US-A- 4 810 452

## Description

The invention relates to a method for manufacturing a trim part arranged to be mounted in particular in an automobile vehicle to form a part of the interior thereof, which trim part comprises at least a flexible skin of a plastic material forming a visible front surface of the trim part, at least one pre-manufactured insert showing a back face situated at a distance behind the visible surface formed by said plastic material and a structural backing layer united to the back side of the flexible skin, preferably through the intermediary of an intermediate foam layer, in which method the pre-manufactured insert is positioned against at least one surface of a mould, at least one flowable skin material comprising a reactive mixture for producing a flexible, elastomeric, non-cellular or micro-cellular polyurethane skin by a spray, a RIM (Reaction Injection Moulding) or a pouring process is applied against said mould surface and against at least one side of the pre-manufactured insert in a layer extending at least partially over said mould surface and over said side to adhere the insert to the skin, the flowable skin material is allowed to harden to achieve said plastic material, and the structural backing layer is united to the back side of the flexible skin through the intermediary of an intermediate foam layer to render the trim part self-supporting.

Such a method is already known from US-A-4 810 452. This US patent discloses a process for making a facing panel for a vehicle's interior, in particular a door panel, wherein fragments of moquette and/or of fabric are first positioned into recesses in a mould surface so that the back sides of these fragments are flush with the mould surface. Subsequently, a continuous layer of polyurethane reaction mixture is sprayed onto the surface formed by the mould surface and by the back of the fragments. A drawback of this known method is that it is only suited for applying thin layered covering materials onto the outside of the facing panel.

Indeed, in the automotive industry, interior trim parts such as dashboards, door panels, covers or other facing panels are getting more and more complex. New car options, such as electronic devices, have to be integrated in a minimum of available space to improve the comfort level and demands of the driver. Even more, the demands from an aesthetic point of view are getting higher as well. New colours, grains, materials are integrated to make the car interior look more attractive.

Another trend is the individualisation of cars. Car drivers want their car to be identified with their personality. They need a higher choice of inserts to create a personal touch in their vehicle. A higher pallet of colours, materials, functions are needed to make a possible customer decide for a specific car. Today, manufacturing processes are limited to a particular amount of versions and options, due to logistics and costs reasons.

Today's manufacturing methods for automotive interior trim parts are usually based on the following concept:
- manufacturing an aesthetic visible material (skin or foil) which may be formed of one base layer or of a base layer covered with a paint, in particular with a so-called inmold paint or with a paint applied afterwards onto the skin;
- combining this aesthetic material with a self-supporting carrier or in other words with a structural backing layer either in a one step process, wherein a rigid PU system is for example applied by R-RIM (Reinforced Reaction Injection Moulding) against the back of the skin, or in a two step process, wherein the carrier is pre-manufactured for example by an injection moulding process from rigid ABS and combined, in a second step, with the skin using for example a PU back foaming process;
- die-cut these parts to allow integration of separately pre-manufactured inserts to be assembled in the self-supporting part.

Assembling the pre-manufactured insert in the trim part is a complex job as a high amount of inserts or tools, wires, etc. have to be mounted resulting in high production costs. Moreover, the different inserts of a wide range of materials have to fit perfectly into the holes cut in the part. Deviations in size of holes and/or inserts result in poor visual quality, which may be the result of the large temperature fluctuations which may occur in the car (from -35°C to +130°C) or of tolerances of die cut processes of parts.

Another problem of inserts which are mounted into trim parts is that they may be at the origin of annoying squeaking noises when the vehicle drives for example over a bumpy road. These squeaking noises are the result of vibrations of the insert relative to the skin or other layers of the trim part and of the rubbing action caused thereby. In view of the high quality demands, these squeaking noises are an important problem in the automotive industry and are often very difficult to avoid.

An object of the present invention is therefore to provide a method for manufacturing a trim part for an automobile vehicle's interior and a skin therefor which allows to integrate the inserts easier in the trim part and which enables moreover to achieve a qualitative visual transition between the visible surface of the trim part formed by the skin and the inserts when these remain visible on the final part in the vehicle.

To this end, in the method according to the invention the insert, which is made of a hard material in contrast to the fragments of moquette and/or of fabric used in the method disclosed in US-A-4 810 452, is positioned against at least one surface of a mould, at least one flowable skin material comprising a reactive mixture for producing a flexible, elastomeric, non-cellular or micro-cellular polyurethane skin by a spray, a RIM (Reaction Injection Moulding) or a pouring process is applied against said mould surface and against at least one side of the pre-manufactured insert in a layer extending at least partially over said mould surface and over said side to adhere the insert to the skin, the flowable skin material is allowed to harden to achieve said plastic material, and the structural backing layer is united through the intermediary of an intermediate foam layer to the back side of the flexible skin to render the trim part self-supporting. The method according to the invention is further characterised in that the mould surface shows an upstanding edge and the pre-manufactured insert, which is made of a hard material, has a lateral side by means of which it is positioned in abutment against the upstanding edge in the mould.

For integrating the pre-manufactured inserts in the trim part, they do no longer have to be assembled in holes in the trim part itself but they can be fixed to the skin when making this skin without having to die-cut holes therein.

Since the inserts are integrated in and fixed to the skin when moulding this skin from the flowable skin material, a qualitative visual transition can be obtained between the inserts and the skin, even in case of some dimensional variation of the inserts or after a prolonged exposure to strongly fluctuating temperatures. Due to the fact that the skin is fixed to the inserts, it will be more dimensionally stable so that even after a long exposure to fluctuating temperatures, the quality of the transitions between the inserts and the skin will be maintained. In the prior art methods, such a dimensionally stable skin was, on the contrary, not automatically obtained and metal reinforcing wires were for example applied in the foam backing layer, against the back of the skin, in order to avoid deformations of the skin or trim part.

An advantage of the use of a reactive mixture for obtaining an elastomeric, non-cellular or micro-cellular polyurethane skin as said flowable skin material is for each of the different application methods (spraying, pouring or injecting) that tool pressures and tool temperatures are relatively low so that there is substantially no risk of damaging the appearance or characteristics of the integrated inserts, whether these inserts are mechanical, aesthetic and/or functional or electronic inserts.

An essential feature of the method according to the invention is that the mould surface shows an upstanding edge, which has a base with a thickness of between 0.1 and 5 mm, and the pre-manufactured insert a lateral side by means of which it is positioned in abutment against the upstanding edge in the mould.

An advantage of this feature is that the upstanding edge enables to prevent the flowable skin material from covering the lateral side of the insert and from penetrating more particularly up to the front face of the insert. In other words, the upstanding edge enables to obtain a sharp and clean transition between the visible surface of the skin and the insert on the visible side of the trim part.

In the prior art, WO95/32850 discloses a method for manufacturing an elastomeric skin of two or more differently coloured elastomeric polyurethane materials. In this method, a portion of the mould is shielded off by means of a mask whilst the elastomeric material of the first colour is sprayed onto the uncovered part. Subsequently, the mask is removed and the elastomeric material of the second colour is sprayed onto the mould surface and partially onto the first skin layer which has already been applied. Then, a foam layer and a structural backing layer are applied. A drawback of this known technique is that both skin parts have to be made from a same kind of material in the mould itself. Moreover, since separate reactive mixtures and separate spraying apparatus have to be provided for each different colour, the variation of the colours during the manufacturing process is limited. In the method according to the present invention, use is on the contrary made of pre-manufactured inserts which are positioned in the mould and which may not only provide aesthetic variations in the skin but also functional elements. The integration of such pre-manufactured inserts in the skin and subsequently in the trim part is not disclosed in WO95/32850.

In a preferred embodiment of the method according to the invention, the pre-manufactured insert shows a front face and is positioned in the mould with this front face substantially flush to the mould surface against which the skin is moulded.

In this embodiment, the insert is preferably left uncovered so that it forms part of the visual surface of the trim part.

In another preferred embodiment of the method according to the invention, the insert shows a front face and is maintained in the mould with its front face at a distance behind the mould surface against which the skin is moulded so that its front face is recessed within the visible surface formed by the skin, said flowable skin material being prevented from entirely covering the front face of the insert, in particular by positioning the insert onto an upstanding edge or onto a raised portion of the mould surface, so that the skin forms a recess in front of the insert.

In this embodiment, it is possible to arrange a finishing element in the recess in front of the insert, the front face of which may in particular be flush to the visible surface of the skin. This embodiment also enables to obtain a qualitative transition between the skin and the front face of the finishing element amongst others since the edge of the skin is fixed at the periphery of the finishing element to the insert and is in other words dimensionally stable even after prolonged exposure to the large temperature variations in a vehicle.

Other particularities and advantages of the invention will become apparent from the following description of some particular embodiments of the method according to the present invention. This description is only given by way of illustrative example and is not intended to limit the scope of the invention as defined in the annexed claims. The reference numerals used in this description relate to the annexed drawings wherein:
Figure 1 shows schematic cross sectional views through a mould illustrating the successive steps of a method for moulding a trim part for an automobile vehicle's interior, in particular a dashboard, in accordance with a particular embodiment of the method according to the present invention;
Figure 2 shows an enlarged view of detail II in Figure 1 being an aesthetic insert abutting an upstanding edge provided on the mould surface and having a back partially covered with the polyurethane material of the skin;
Figure 3 shows an enlarged view of detail III in Figure 1 being an aesthetic insert abutting on only one side an upstanding edge provided on the mould surface and having a back which is entirely covered with the polyurethane material of the skin;
Figures 4 and 5 illustrate decorative frames inserted in the gaps around the inserts;
Figures 6 to 8 show enlarged views similar to the view of Figure 2 but relating to some variant embodiments;
Figures 9 to 12 illustrate different embodiments of flexible lips on the inserts;
Figure 13 shows an enlarged view similar to the view of Figure 2 but illustrating the integration of a functional mechanical insert in the trim part, more particularly a ventilation housing, and having the foam backing layer and the structural backing layer or carrier applied thereto as illustrated in Figure 1;
Figure 14 shows the ventilation housing of Figure 13 integrated in the trim part removed from the mould and having its back die-cut to provide a hole through which adjustable ventilation blades are mounted in the lid;
Figure 15 shows an enlarged view similar to the view of Figure 13 but illustrating the integration of a functional electronic insert in the trim part comprising for example an electronic PLC device and switches and LEDs;
Figure 16 shows an enlarged view similar to the view of Figure 13 but Illustrating the integration of a mechanical connector formed by a threaded ring in the trim part;
Figure 17 shows the mechanical connector of Figure 16 integrated in the trim part removed from the mould and having a finishing element assembled in the recess formed in front of the mechanical connector in the trim part;
Figure 18 shows an alternative embodiment of the mechanical connector illustrated in Figure 17; and
Figure 19 shows a view similar to the view of Figure 16 but showing the integration of an insert with a mechanical and an electric connector.

The invention generally relates to a method for manufacturing a trim part 1 for an automobile vehicle's interior, in particular interior trim parts such as dashboards, doorpanels, consoles, glove compartments, etc. or at least a skin 2 therefor which forms the visible front surface 3 of such trim parts 1 or panels. In addition to the skin 2, the trim part 1 comprises at least a structural backing layer 4 or rigid carrier united to the back side of the skin 2, usually through the intermediary of an intermediate foam layer 5. In the method according to the invention, at least one pre-manufactured insert 6 is further integrated in the trim part 1. This insert 6 may be composed of an aesthetic, a functional or an electronic element. An essential feature of the invention is that the insert 6 shows a back face 7 situated at a distance behind the visual front surface 3 formed by the skin 2 or, in other words, that the insert 6 is not simply applied, for example adhered, with its back face 7 onto the front surface 3 of the skin 2 like in US-A-4 810 452.

The skin 2, which is a flexible skin, is made by applying at least one flowable skin material for producing an elastomeric, non-cellular or micro-cellular plastic skin against at least one surface 8 of a mould 9. The skin has normally an average thickness in the range of 0.1 to 3 mm and usually in the range of 0.5 to 1.5 mm whilst its density is usually higher than 400 kg/m³ and preferably higher than 700 kg/m³ due to the fact that the skin is non-cellular or micro-cellutar. For determining the average thickness of the skin or other layers, the volume and the surface area of the skin are measured and the volume is divided by the surface area. The flowable skin material is a reactive mixture for obtaining an elastomeric, non-cellular or micro-cellular polyurethane material. An advantage of the use of a reactive mixture is that tool pressures and tool temperatures can be kept relatively low so that there is substantially no risk of damaging the appearance or characteristics of the integrated inserts.

The reactive polyurethane mixture can either be applied by a spray process against the surface 8 of an open mould or it can be applied in a closed mould, more particularly poured but preferably injected in accordance with a reaction injection moulding (RIM) process. The spray, the pouring and the RIM processes are known per se so that they need not be described into further detail. For the spray process, reference can moreover be made to the technique described in European patent EP-B-0 303 305.

As reactive polyurethane mixture, use can be made of a light-stable, mass-stained coloured polyurethane reaction mixture as disclosed for example in European patent EP-B-0 379 246 for a spray process and in WO98/14492 for a reaction injection moulding process. Both these patent publications are incorporated herein by way of reference with respect to the particular compositions disclosed therein.

In a variant embodiment, a finishing layer, in particular a light-stable polyurethane paint or in other words a so-called PU inmold paint that may be either water based or solvent based, can be applied first against the mould surface. This paint composes together with the elastomeric layer applied thereto subsequently, the skin 2. In this embodiment, the elastomeric layer does not necessarily have to be light stable so that use can be made of an aromatic polyurethane system for this layer.

The structural backing layer 4 or carrier which is applied against the back of the skin 2 can be made of various materials such as PVC, ABS, SMA, PU, etc. which provide the necessary strength to the trim part 1 in order to render it self-supporting. The backing layer 4 can be formed in situ, by a one step process, against the back the skin 2, in particular starting from a rigid PU system applied by an S-RIM (Structural RIM) or an R-RIM (Reinforced RIM) process in a closed mould or by a spray technique in an open mould as disclosed for example in European patent EP-B-0 642 411. Optionally, a polyurethane foam system can first be applied against the back of the skin 2 to form an intermediate foam layer 5 in order to improve the touch comfort of the panel (see also EP-B-0642411).

The structural backing layer 4 can also be applied in a two step process against the back of the skin 2. In such a process, the backing layer 4 is for example first moulded in accordance with an injection or a reaction injection process. In the second step, it may then for example be glued directly to the back of the skin 2. In order to improve the soft touch of the trim part 1, it is however usually united to the back of the skin through the intermediary of an intermediate foam layer 5 which is formed in situ between the skin 2 and the structural backing layer 4. The reactive polyurethane or other mixture for such a foam can either be poured onto the skin 2 just before applying the rigid backing layer 4 thereto or can be injected between the skin 2 and the backing layer 4.

A characterising feature of the method according to the invention is the way wherein the pre-manufactured insert or inserts 6 are integrated in the trim part 1. These inserts 6 are more particularly adhesively fixed to the plastic material of the skin, preferably at least partially by the adhesion of said flowable skin material itself, before it has completely hardened or in other words before the reactive mixture is completely cured. Since the insert is fixed to the skin layer, the skin 2 remains dimensionally stable around the insert so that a qualitative transition can be obtained whilst squeaking noises can also be avoided by this fixation. Moreover, no further assembling steps are required to mount the insert in the trim part. However, this does not preclude the subsequent mounting of other elements onto the trim part or onto the inserts integrated therein by the process according to the invention.

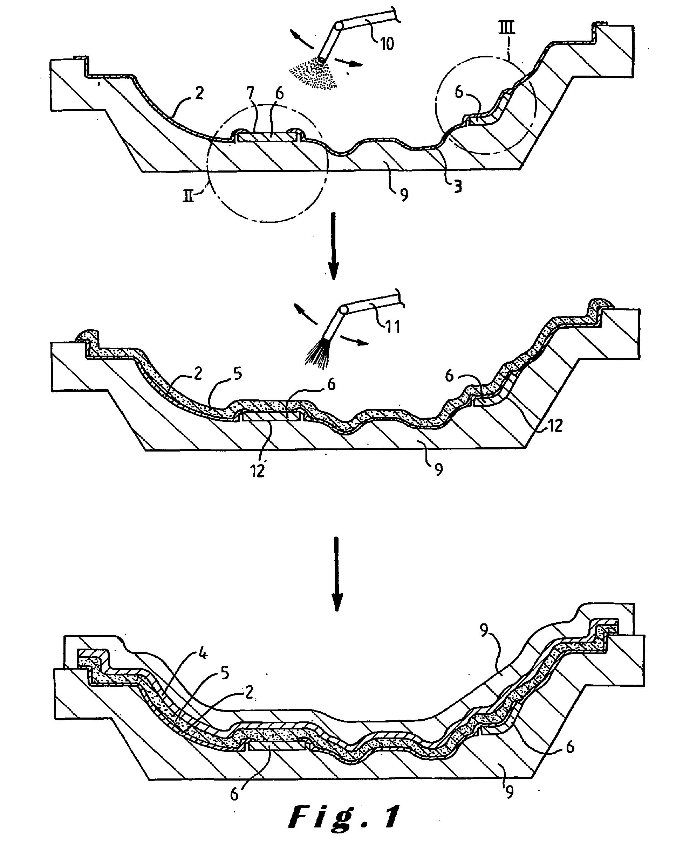

Figure 1 illustrates schematically one way wherein the method according to the invention can be carried out for manufacturing a trim part 1 for an automobile vehicle's interior, more particularly a dashboard. In this embodiment, the pre-manufactured insert or inserts 6 are fixed to the skin 2 by positioning them against the mould surface 8 and by applying the reactive mixture for the skin 2 subsequently against this mould surface 8 and against at least one side of the inserts 6 in a layer extending at least partially over the mould surface 8 and over said side of the inserts 6.

In the embodiment of Figure 1, use is made of a two-part mould 9. Before positioning the inserts 6 therein, a mould release agent and/or an inmold coating can optionally first be sprayed in the mould 9. In the illustrated embodiment, the inserts 6 are positioned against the mould surface 8 of the lower mould part. Subsequently, a reactive polyurethane mixture is sprayed by means of a spray gun 10 in a layer extending over the mould surface 8 and at least partially also over the back faces 7 of the inserts 6.

In a second step, a reaction mixture for obtaining a polyurethane foam layer 5 is poured by means of a pouring nozzle or mixing head 11 onto the back of the polyurethane skin 2, preferably when the skin 2 is still somewhat sticky. In case of undercuts, the skin made in the first step should be transferred to a second mould, the lower mould part of which consists of two or more parts allowing to demould the trim part.

Then, in a third step, the uppermost part of the mould 9 having a pre-manufactured structural backing layer 4 attached thereto is closed and the skin and the intermediate foam layer are allowed to cure before demoulding the thus obtained trim part 1. In this embodiment, the structural backing layer 4 may be made in particular of a thermoplastic material such as for example ABS or SMA (styrene maleic anhydride) which can be injected in a separate injection mould. Of course, it is also possible to make the structural backing layer for example of a reactive polyurethane or polyisocyanurate mixture.

Instead of pouring the foam material in the mould 9 before closing it, this foam material can also be injected, after having closed the mould 9, between the skin 2 and the structural backing layer 4.

In a further variant embodiment, the reactive mixture for obtaining the polyurethane foam layer 5 can be sprayed in the second stap by means of a spray gun onto the back of the polyurethane skin 2. When the intermediate foam layer 5 has thus been formed, the mould is closed and a suitable reaction mixture, for example a polyurethane or a polyisocyanurate reaction mixture, for obtaining the rigid structural backing layer 4 can then be injected into the mould cavity by means of a third spray gun.

The inserts 6 illustrated in Figure 1 are intended to remain visible on the final trim part 1 in the car and show more particularly a front face 12 which is left uncovered to form part of the visible surface 3 of the trim part 1. They are made of hand aesthetic materials e.g. wood, metal, plastic parts such as ABS (acrylbutadiene styrene), PC (polycarbonate) or even transparent or decorative materials. They can also be masked.

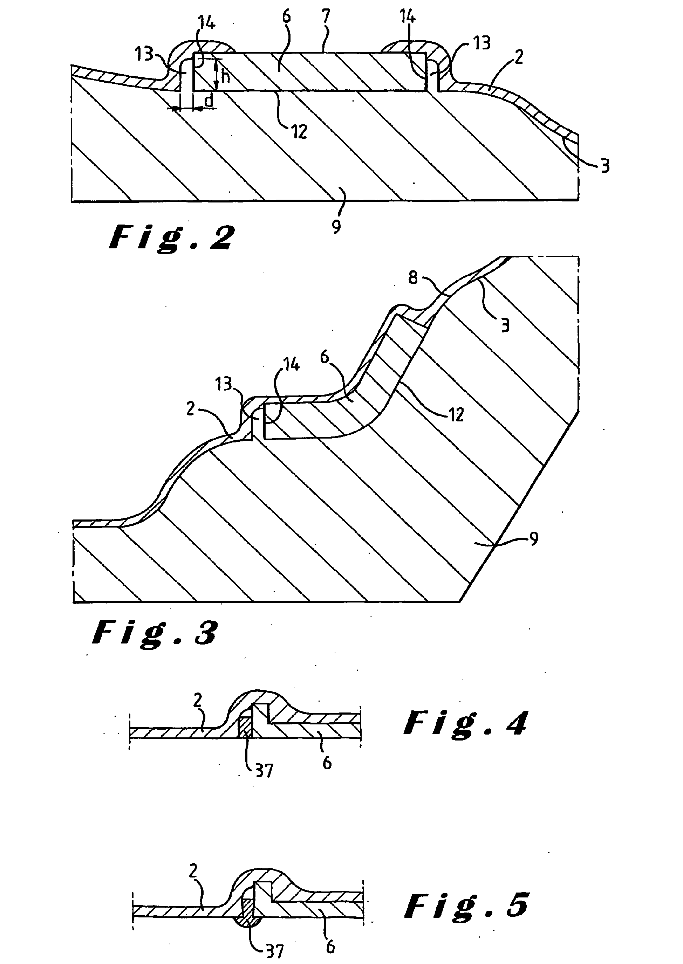

In order to achieve a nicely finished transition on the visible front side of the trim part 1 between the polyurethane material of the skin 2 and the edges of the aesthetic inserts 6, the mould surface 8 is provided with upstanding edges 13 and the inserts 6 are positioned with their lateral sides 14 in abutment against these upstanding edges 13. Figure 2 shows on a larger scale the abutment of one of the inserts with its lateral sides 14 against the upstanding edges 13. In case the visual aspect is a particular area is less important as for the second insert of Figure 1, shown on a larger scale in Figure 3, a lower upstanding edge or even no edge at all may be used.

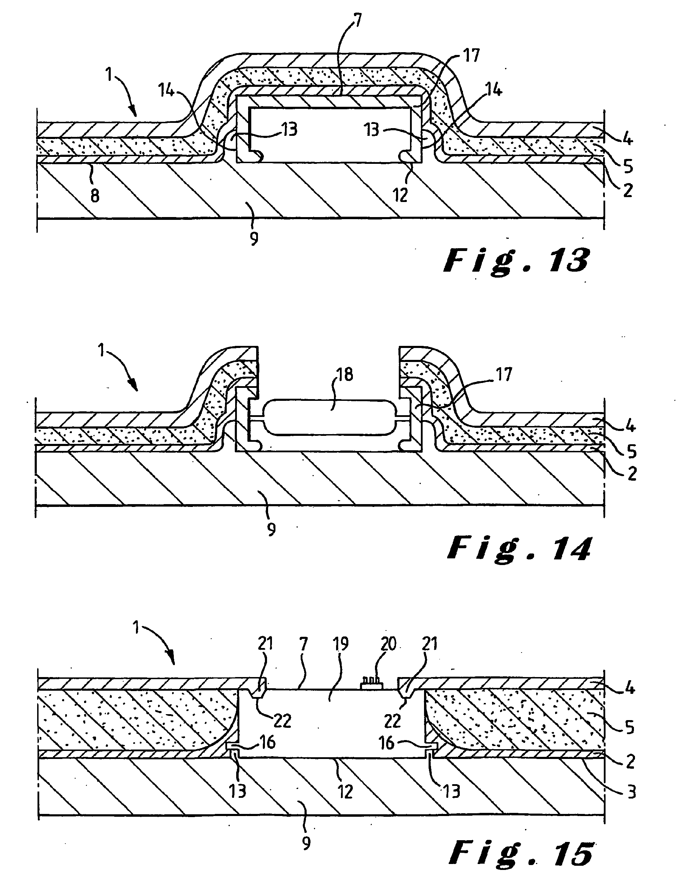

In case the visual aspect is important, the upstanding edge or ridge 13 has preferably a base showing a thickness d of between 0.1 and 5 mm and more preferably of between 0.25 and 1 mm. The thickness of this base determines indeed the width of the gap between the elastomeric skin layer and the insert in the final part, optionally with radius, as illustrated for example in Figures 13 and 14, when aesthetically demanded. For aesthetic reasons, it may sometimes be desirable to withdraw the gap from view. This can however easily be achieved by pressing a decorative frame 37, having for example a chrome or a wood look, into the gap. In the embodiment illustrated in Figure 4, the decorative frame 37 has the same width as the gap and provides thus a narrow edge around the insert. Figure 5 illustrates another embodiment wherein the frame 37 shows a decorative head portion which partially covers the adjoining edges of the insert and the skin material. In this embodiment, the frame shows a dovetail to clamp the frame more strongly into the gap.

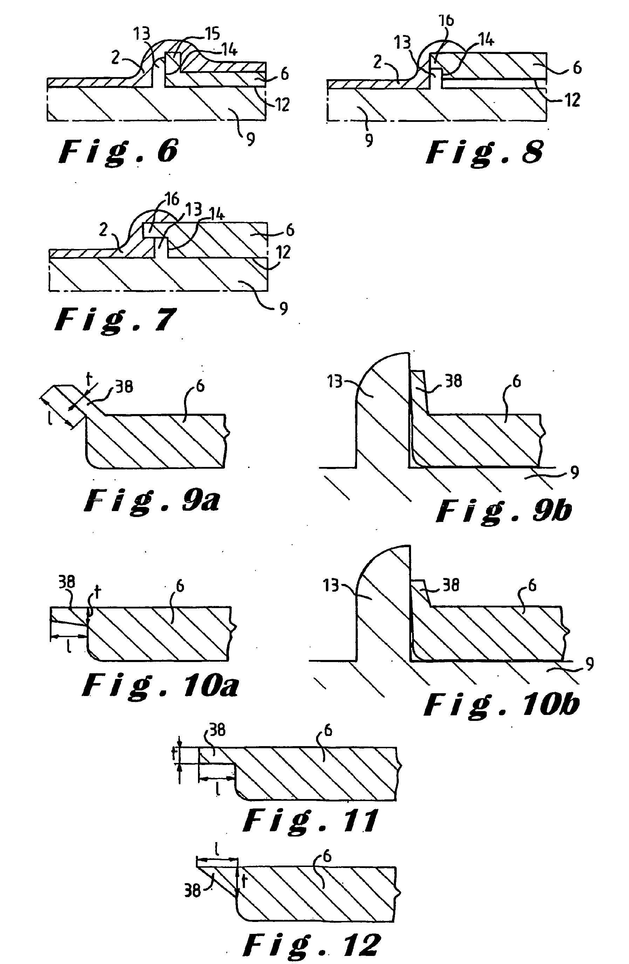

When the insert remains visible, penetration of reactive mixture for the skin between the upstanding edges 13 and the lateral sides of the inserts 6 down to the front face 12 of the inserts is preferably to be avoided. By oversize between the upstanding edges and the insert, a slight pressure will create a sealing for the spray. The upstanding edges 13 have in particular a height h of at least 0.5 mm, preferably a height h of at least 1 mm and most preferably a height h of at least 2 mm. Depending on the viscosity of the reactive mixture, the pressure at which the insert abuts the upstanding edges, etc. soiling of the front face of the inserts by penetrating reactive mixture can thus be avoided. In case the insert itself has a too small thickness, the height over which it abuts against the upstanding edge can, if necessary be increased by applying a (foam) backing layer against the back of the insert and/or its peripheral edges can be provided with flanges 15 as shown in Figure 6.

As illustrated in Figure 7 the insert 6 can further be provided with a lateral projection 16 by means of which the insert is positioned on top of the upstanding edge 13 so that the projection 16 projects over the upstanding edge 13. Especially when the reactive mixture for the skin 2 is sprayed against the mould surface 8, the shielding effect provided by the lateral projection 16 also contributes in preventing the reactive mixture from penetrating between the insert 6 and the upstanding edge 13. On the other hand, as illustrated in Figure 8, the lateral projection 16 can also be used to suspend the insert 6 onto the upstanding edge 13 so that its front face 12 is maintained at a distance behind the mould surface 8 against which the skin is moulded and so that its front face 12 is on other words recessed within the visible surface formed by the elastomeric skin layer 2. In the previously described embodiments, the inserts 6 were on the contrary positioned with their front faces 12 substantially flush to the mould surface 8 against which the skin 2 is moulded so that at the location of the inserts a nice continuous visible surface was obtained. In some cases, preference can however also be given to positioning the inserts into a small recess in the mould surface so that they project somewhat out of the visible surface of the trim part.

In Figures 9 to 12 additional embodiments are illustrated wherein an improved sealing between insert 6 and upstanding edge 13 is achieved by means of a flexible lip 38. In Figure 9a, the lip 38 projects obliquely upwards from the top of the lateral side of the insert 6 and is pushed further upwards when positioning the insert against the upstanding edge. In this way, an effective seal is formed as illustrated in Figure 9b. A further embodiment of the lip is illustrated in Figures 10a and 10b showing the lip respectively in its undeformed and in its deformed state. Figures 11 and 12 illustrate some further possible shapes of the lip 38. In general both the thickness t and the length I of the lips indicated in the figures will usually be comprised between 0.2 and 5 mm.

The inserts 6 integrated in the skin 2 may not only have an aesthetic function but may also have a functional function. An example thereof is illustrated in Figures 13 and 14. In this example, a ventilation housing 17 positioned between upstanding edges 13 against the mould surface 8 so that a nicely finished transition is obtained between the elastomeric skin layer 2 and the decorative, chrome-like front face 12 of the insert 17. This insert 17 has a closed back face 7 so that its back may be entirely covered with the elastomeric material of the skin 2, the foam layer 5 and the structural backing layer 4. As shown in Figure 14, the back side of the insert 17 can subsequently be opened by die-cutting the different superimposed layers. In this way, not only air can be blown through the ventilation housing but adjustable blades 18 for controlling the direction of the air flow and/or for closing the ventilation opening can be mounted from the back side within the ventilation housing 17. Alternatively, the blades can already be included during positioning of the insert.

A further example of a functional insert 6 is illustrated in Figure 15. In this embodiment a PLC device 19 (Programmable Logic Control) provided with lateral projecting flanges 16 is positioned with these flanges on top of the upstanding edges 13. At its visible front face, the PLC device may show for example several LEDs and switches whilst at its back face, it comprises for example an electrical connector 20. The PLC device has such a large thickness, that spraying of the reactive mixture for the skin 2 can be limited to its lateral sides. For preventing the foam material of the intermediate foam layer 5 from covering the back and thus in particular the electrical connector 20 of the PLC device, the pre-manufactured structural layer 4 is provided with a hole surrounded by a downward flange 21 which fits into a groove 22 in the back of the PLC device. In a variant embodiment, only the PLC housing can be integrated first in the trim part, the PLC device itself can then be easily mounted afterwards in this housing.

In the previously described embodiments, the pre-manufactured inserts 6 showed a front face 12 which is left uncovered to form part of the visible surface of the trim part 1. According to the invention, the insert 6 may however also at least partially be hidden from view by fixing a finishing element thereto so as to cover the insert 6. In this case, the insert 6 is preferably maintained with its front face 12 at a distance behind the mould surface 8 against which the skin 2 is moulded so that its front face 12 is recessed within the visible surface 3 formed by the skin 2. The reactive mixture for the skin layer 2 is prevented from entirely covering the front face 12 of the insert 6, in particular by positioning the insert 6 onto an upstanding edge 13 or onto a raised portion 23 of the mould surface, so that the skin 2 forms a recess 24 in front of the insert 6.

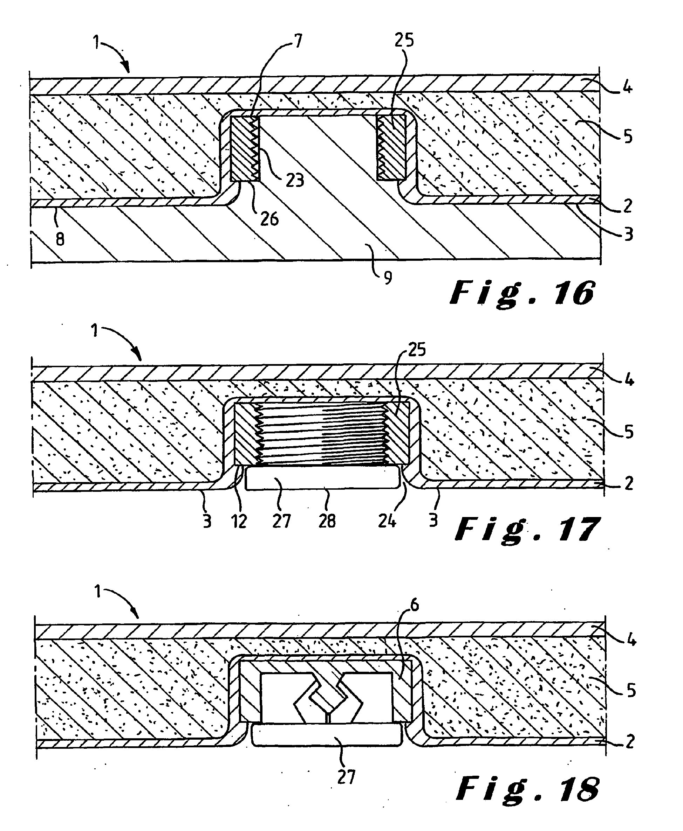

Such an embodiment is illustrated in Figure 16. In this embodiment, the insert 6 consists of an internally threaded ring 25 which is positioned onto a shoulder 26 of a raised portion 23 of the mould surface 8. The central part of this raised portion extends up to the upper edge of the ring 25 and prevents the reactive mixture for the skin to enter the ring 25. As shown in Figure 17, when the trim part has been demoulded, a decorative finishing element 27 can be screwed in the threaded ring insert 25, preferably until a decorative front face 28 of this finishing element 27 is substantially flush to the visible surface 3 formed by the skin 2. In this case also, a nicely finished qualitative transition can be obtained between the front face of the finishing element and the visible surface of the moulded, elastomeric skin layer 2.

Instead of a screw thread, use could also be made of a bayonet closure, a snap-fit connection or any other quick coupling system for fixing the finishing element 27 to the integrated insert 6. The ring could further only provide a guiding housing wherein the finishing element is inserted and fixed on the back of the trim part by a separate fixing element. In this embodiment, a set of different interchangeable finishing elements 27 are preferably provided for being fixed to or through the insert or inserts. An advantage of this embodiment is that a lot of individualisation possibilities can rather easily be offered since the finishing elements can be mounted at the end of the car manufacturing process or even later, for example when the car is already with the salesman or in use. Figure 18 illustrates a possible snap-fit connection between the insert 6 and the finishing piece 27. In practice, a similar snap-fit connection is already used between the structural backing layer 4 and a finishing piece. By the method according to the present invention, the insert is however more accurately positioned with respect to the visible front surface 3 of the skin 2 so that a higher quality transition is obtained between the front face 28 of the finishing element and the front surface 3 of the skin.

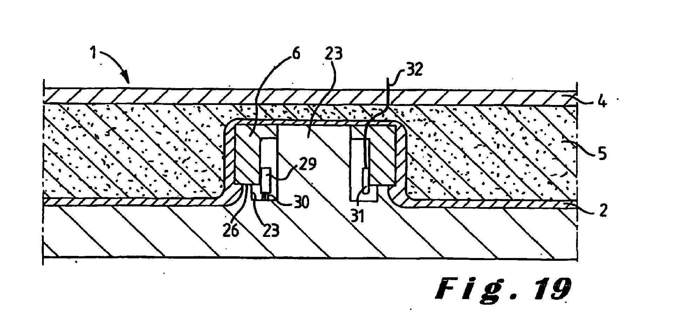

The finishing element 27 may not only have an aesthetic function but could also be formed by a functional, in particular an electronic element. A possible insert for such an element is illustrated in Figure 19. This insert has a shape similar to the ring of Figure 16 but is provided with a chip 29 with connector pins 30 and with a further electrical connector pin 31 connected to an electrical wire 32. The finishing element, comprising for examples LEDs and switches or buttons, can be fixed to this insert by a snap-fit connection. In a variant embodiment, an electric or electronic compound could for example also be screwed or snapped in the insert illustrated in Figures 17 and 18 respectively. In that case, the electrical wire or wires could be guided through a hole made through the structural backing layer 4 behind the insert 6.

However, in accordance with the method according to the present invention and as illustrated in Figure 20, a second layer 34 of a further reactive mixture for obtaining an elastomeric, non-cellular or micro-cellular polyurethane material, which may be the same as or different from the reactive mixture used for said first layer 33, is applied, after having positioned the pre-manufactured insert 6 onto the first layer 33, against the back of the first layer 33 and against at least one side of the insert 6. In this way, the insert 6 is not only adhesively bonded to the skin 2 by the reactive material of the first layer 33 but also by the reactive material of the second layer 34. In the case of relatively thin inserts 6, the second layer 34 of the further reactive mixture may also be applied against the back face of the insert 6 so that it will be entirely encapsulated in the skin 2. The second layer 34 of the further reactive mixture is preferably applied before the first layer 33 of elastomeric material is completely cured so that a good adhesion is obtained between both layers without requiring the use of a primer.

In the above described embodiments wherein the front face of the insert 6 is covered by the elastomeric skin layer, the insert is preferably an electronic circuit or a part therefor and comprises in particular an element selected from the group consisting of an electronic print plate, preferably a flexible print plate, electric wiring preferably provided on a flexible print plate, an electric push button, a readable electronic code, a detector, a chip, micro-electronic elements, integrated intelligence elements, smart cart technology elements, conductive fibres, interfaces and antennas, car detection system elements or a combination of these elements. The insert illustrated in Figure 20 comprises for example an electrical switch 35 connected to electric wiring provided on a thin, flexible print plate 36 extending within the skin, between the two layers thereof.

When the insert provides a readable electronic code enabling to identify the car or even to locate it when it has been stolen, an advantage of the above described method is that the coding device can be positioned randomly by the robot onto the first layer so that it cannot easily be removed by a thief since he does not know where the coding device is exactly situated.

## Claims

1. A method for manufacturing a trim part (1) comprising at least a flexible skin (2) of a plastic material forming a visible front surface (3) of the trim part (1), at least one pre-manufactured insert (6) showing a back face (7) situated at a distance behind the visible surface (3) formed by said plastic material and a structural backing layer (4) united to a back side of the flexible skin (2), which method comprises the steps of:
- positioning said pre-manufactured insert (6) against at least one surface (8) of a mould (9);
- applying at least one flowable skin material comprising a reactive mixture for producing a flexible, elastomeric, non-cellular or micro-cellular polyurethane skin (2) by a spray, a RIM or a pouring process against said mould surface (8) and against at least one side of the pre-manufactured insert (6) in a layer extending at least partially over said mould surface (8) and over said side to adhere the insert (6) to the skin (2);
- allowing the flowable skin material to harden to achieve said plastic material; and
- uniting the structural backing layer (4) to the back side of the flexible skin (2) through the intermediary of an intermediate foam layer (5) to render the trim part (1) self-supporting,
wherein the mould surface (8) shows an upstanding edge (13) and said pre-manufactured insert (6) has a lateral side (14) by means of which it is positioned in abutment against said upstanding edge (13) in said mould (9),
**characterised in that**
- said pre-manufactured insert (6) is made of a hard material, and
- said upstanding edge (13) has a base showing a thickness (d) of between 0.1 and 5 mm.

2. A method according to claim 1, **characterised in that**, said lateral side (14) comprises a flexible lip (38) arranged to abut against said upstanding edge (13) to form a seal for the flowable skin material.

3. A method according to claim 1 or 2, **characterised in that** said upstanding edge (13) has a height (h) of at least 0.5 mm.

4. A method according to any one of the claims 1 to 3, **characterised in that** the pre-manufactured insert (6) is positioned on top of said upstanding edge (13) in the mould in a manner such as to project over the upstanding edge (13).

5. A method according to claim 4, **characterised in that** a lateral projection (16) of the insert (6) is positioned on top of said upstanding edge (13) in the mould in a manner such as to project over the upstanding edge (13)

6. A method according to any one of the claims 1 to 5, **characterised in that** the pre-manufactured insert (6) shows a front face (12) which is left uncovered to form part of said visible surface (3) of the trim part (1 ).

7. A method according to any one of the claims 1 to 5, **characterised in that** the pre-manufactured insert (6) is at least partially hidden from view by fixing a finishing element (27) thereto so as to cover the insert (6).

8. A method according to claim 7, **characterised in that** said insert (6) and said finishing element (27) comprise mutually cooperating coupling means enabling to fix the finishing element (27) from the front side of the trim part (1) to the insert (6).

9. A method according to any one of the claims 1 to 8, **characterised in that** the pre-manufactured insert (6) shows a front face (12) and is positioned in the mould (9) with this front face (12) substantially flush to the mould surface (8) against which the skin (2) is moulded.

10. A method according to any one of the claims 1 to 9, **characterised in that** said insert (6) shows a front face (12) and is maintained in said mould (9) with its front face (12) at a distance behind the mould surface (8) against which the skin (2) is moulded so that its front face (12) is recessed within the visible surface formed by the skin (2), said flowable skin material being prevented from entirely covering the front face (12) of the insert (6), in particular by positioning the insert (6) onto an upstanding edge (13) or onto a raised portion (23) of the mould surface (8), so that the skin (2) forms a recess (24) in front of the insert (6).

11. A method according to claims 7 and 10, **characterised in that** said finishing element (27) has a further front face (28) and is inserted in the recess (24) until this further front face (28) is substantially flush to the visible surface (3) formed by the skin (2).

12. A method according to any one of the claims 1 to 11, **characterised in that** said flowable skin material is applied by spraying against the mould surface (8).

13. A method according to any one of the claims 1 to 11, **characterised in that** said flowable skin material is applied against the mould surface (8) by using a closed mould and by filling this closed mould with said flowable skin material either by a pouring or a reaction injection moulding process.

14. A method according to any one of the claims 1 to 13, **characterised in that** said skin (2) is made by applying first a finishing layer against said mould surface, in particular an inmold paint, and subsequently said flowable skin material.

15. A method according to any one of the claims 1 to 14, **characterised in that** said skin (2) has an average thickness in the range of 0.1 to 3 mm.

## Patentansprüche

1. Ein Verfahren zur Herstellung eines Innenausstattungselements (1), welches zumindest eine flexible Haut (2) aus einem Kunststoffmaterial, das eine sichtbare Vorderseite (3) des Innenausstattungselements (1) formt, zumindest einen vorgefertigten Einsatz (6) mit einer Rückseite (7), gelegen in einem Abstand hinter der sichtbaren Oberfläche (3), welche durch das erwähnte Kunststoffmaterial und eine strukturelle Rückenschicht (4) geformt ist, vereint auf einer Rückseite der flexiblen Haut (2), umfasst, wobei das Verfahren folgende Schritte umfasst:
- Positionieren des erwähnten vorgefertigten Einsatzes (6) an zumindest einer Oberfläche eines Formstücks (9);
- Auftragen zumindest eines fließfähigen Hautmaterials, welches eine Reaktionsmischung zur Herstellung einer flexiblen, elastomeren, nicht-zellularen oder mikrozellularen Polyurethanhaut (2) umfasst, durch ein Sprüh-, ein RIM- oder ein Gussverfahren auf die erwähnte Formstückoberfläche (8) und auf zumindest eine Seite des vorgefertigten Einsatzes (6) in einer Schicht, die sich zumindest teilweise über die erwähnte Formstückoberfläche (8) und über die erwähnte Seite ausdehnt, sodass der Einsatz (6) an der Haut (2) haftet;
- Aushärten des fließfähigen Hautmaterials, um das erwähnte Kunststoffmaterial zu erhalten; und
- Verbinden der strukturellen Rückenschicht (4) mit der Rückseite der flexiblen Haut (2) mittels einer Zwischenschaumschicht (5), um das Innenausstattungselement (1) selbsttragend zu machen,
wobei die Formstückoberfläche (8) einen aufstehenden Rand (13) aufweist und der erwähnte vorgefertigte Einsatz (6) eine seitliche Seite (14) hat, mit der er am erwähnten aufstehenden Rand (13) im erwähnten Formstück (9) anliegt,
**dadurch gekennzeichnet, dass**
- der erwähnte vorgefertigte Einsatz (6) aus einem harten Material hergestellt ist, und
- dass der erwähnte aufstehende Rand (13) eine Basis mit einer Dicke (d) von zwischen 0,1 und 5 mm hat.

2. Ein Verfahren nach Anspruch 1, **dadurch gekennzeichnet, dass** die erwähnte seitliche Seite (14) eine flexible Lippe (38) umfasst, angeordnet, um an den erwähnten aufstehenden Rand (13) anzuliegen, um ein Siegel für das fließfähige Hautmaterial zu formen.

3. Ein Verfahren nach Anspruch 1 oder 2, **dadurch gekennzeichnet, dass** der erwähnte aufstehende Rand (13) eine Höhe (h) von mindestens 0,5 mm hat.

4. Ein Verfahren nach irgendeinem der Ansprüche 1 bis 3, **dadurch gekennzeichnet, dass** der vorgefertigte Einsatz (6) so auf dem erwähnten aufstehenden Rand (13) im Formstück positioniert wird, dass er über den aufstehenden Rand (13) hinausragt.

5. Ein Verfahren nach Anspruch 4, **dadurch gekennzeichnet, dass** ein seitlicher Vorsprung (16) des Einsatzes (6) so auf dem erwähnten aufstehenden Rand (13) im Formstück positioniert wird, dass er über den aufstehenden Rand (13) hinausragt.

6. Ein Verfahren nach irgendeinem der Ansprüche 1 bis 5, **dadurch gekennzeichnet, dass** der vorgefertigte Einsatz (6) eine Vorderseite (12) aufweist, die unbedeckt bleibt, um einen Teil der erwähnten sichtbaren Oberfläche (3) des Innenausstattungselements (1) zu formen.

7. Ein Verfahren nach irgendeinem der Ansprüche 1 bis 5, **dadurch gekennzeichnet, dass** der vorgefertigte Einsatz (6) zumindest teilweise nicht sichtbar ist, indem ein Fertigungselement (27) daran befestigt wird, um den Einsatz (6) zu bedecken.

8. Ein Verfahren nach Anspruch 7, **dadurch gekennzeichnet, dass** der erwähnte Einsatz (6) und das erwähnte Fertigungselement (27) miteinander zusammenwirkende Koppelungsmittel umfassen, wodurch das Fertigungselement (27) von der Vorderseite des Innenausstattungselements (1) am Einsatz (6) befestigt werden kann.

9. Ein Verfahren nach irgendeinem der Ansprüche 1 bis 8, **dadurch gekennzeichnet, dass** der vorgefertigte Einsatz (6) eine Vorderseite (12) aufweist und im Formstück (9) mit dieser Vorderseite (12) im Wesentlichen bündig mit der Formstückoberfläche (8), gegen die die Haut (2) geformt wird, positioniert ist.

10. Ein Verfahren nach irgendeinem der Ansprüche 1 bis 9, **dadurch gekennzeichnet, dass** der erwähnte Einsatz (6) eine Vorderseite (12) aufweist und im erwähnten Formstück (9) mit seiner Vorderseite (12) in einem Abstand hinter der Formstückoberfläche (8), gegen die die Haut (2) geformt wird, gehalten wird, sodass seine Vorderseite (12) in der sichtbaren Oberfläche, welche durch die Haut (2) geformt ist, vertieft ist, wodurch das erwähnte fließfähige Hautmaterial daran gehindert wird, die Vorderseite (12) des Einsatzes (6) völlig zu bedecken, insbesondere durch Positionieren des Einsatzes (6) auf einen aufstehenden Rand (13) oder auf einen erhabenen Abschnitt (23) der Formstückoberfläche (8), sodass die Haut (2) eine Vertiefung (24) vor dem Einsatz (6) formt.

11. Ein Verfahren nach Ansprüchen 7 und 10, **dadurch gekennzeichnet, dass** das erwähnte Fertigungselement (27) eine weitere Vorderseite (28) hat und in die Vertiefung (24) eingeführt wird, bis diese weitere Vorderseite (28) im Wesentlichen bündig mit der sichtbaren Oberfläche (3) ist, die durch die Haut (2) geformt wird.

12. Ein Verfahren nach irgendeinem der Ansprüche 1 bis 11, **dadurch gekennzeichnet, dass** das erwähnte fließfähige Hautmaterial durch Sprühen auf die Formstückoberfläche (8) aufgetragen wird.

13. Ein Verfahren nach irgendeinem der Ansprüche 1 bis 11, **dadurch gekennzeichnet, dass** das erwähnte fließfähige Hautmaterial auf die Formstückoberfläche (8) aufgetragen wird, indem ein geschlossenes Formstück verwendet wird und dieses geschlossene Formstück durch ein Guss- oder ein Reaktionsgießformverfahren mit dem erwähnten fließfähigen Hautmaterial gefüllt wird.

14. Ein Verfahren nach irgendeinem der Ansprüche 1 bis 13, **dadurch gekennzeichnet, dass** die erwähnte Haut (2) hergestellt wird, indem zuerst eine Oberflächenschicht auf die erwähnte Formstückoberfläche aufgetragen wird, insbesondere eine In-Mould-Farbe, und danach das erwähnte fließfähige Hautmaterial.

15. Ein Verfahren nach irgendeinem der Ansprüche 1 bis 14, **dadurch gekennzeichnet, dass** die erwähnte Haut (2) eine durchschnittliche Dicke im Bereich von 0,1 bis 3 mm hat.

## Revendications

1. Procédé pour fabriquer une pièce de garniture (1) comprenant au moins une peau flexible (2) en une matière plastique formant une surface frontale visible (3) de la pièce de garniture (1), au moins un insert pré-fabriqué (6) présentant une face arrière (7) située à une distance derrière la surface visible (3) formée par ladite matière plastique et une couche de support structurale (4) unie à un côté arrière de la peau flexible (2), lequel procédé comprend les étapes consistant à :
- positionner ledit insert pré-fabriqué (6) contre au moins une surface (8) d'un moule (9) ;
- appliquer au moins un matériau de peau fluide comprenant un mélange réactionnel pour produire une peau de polyuréthane flexible, élastomère, non cellulaire ou microcellulaire par un processus de pulvérisation, un processus de moulage par injection-réaction (RIM) ou un processus de versage contre ladite surface (8) de moule et contre au moins un côté de l'insert pré-fabriqué (6) dans une couche s'étendant au moins en partie sur ladite surface (8) de moule et sur ledit côté pour coller l'insert (6) à la peau (2) ;
- laisser le matériau de peau fluide durcir pour obtenir ladite matière plastique ; et
- unir la couche de support structurale (4) au côté arrière de la peau flexible (2) par l'intermédiaire d'une couche de mousse intermédiaire (5) pour rendre la pièce de garniture (1) autoportante,
dans lequel la surface (8) de moule présente un bord vertical (13) et ledit insert pré-fabriqué (6) a un côté latéral (14) au moyen duquel il est positionné de manière à buter contre ledit bord vertical (13) dans ledit moule (9),
**caractérisé en ce que**
- ledit insert pré-fabriqué (6) est réalisé en un matériau dur, et
- ledit bord vertical (13) a une base présentant une épaisseur (d) comprise entre 0,1 et 5 mm.

2. Procédé selon la revendication 1, **caractérisé en ce que** ledit bord latéral (14) comprend une lèvre flexible (38) disposée pour buter contre ledit bord vertical (13) pour former un joint étanche pour le matériau de peau fluide.

3. Procédé selon la revendication 1 ou 2, **caractérisé en ce que** ledit bord vertical (13) a une hauteur (h) d'au moins 0,5 mm.

4. Procédé selon l'une quelconque des revendications 1 à 3, **caractérisé en ce que** l'insert pré-fabriqué (6) est positionné au-dessus dudit bord vertical (13) dans le moule de manière à s'avancer au-dessus du bord vertical (13).

5. Procédé selon la revendication 4, **caractérisé en ce qu'**une projection latérale (16) de l'insert (6) est positionnée au-dessus dudit bord vertical (13) dans le moule de manière à s'avancer au-dessus du bord vertical (13).

6. Procédé selon l'une quelconque des revendications 1 à 5, **caractérisé en ce que** l'insert pré-fabriqué (6) présente une face frontale (12) qui est laissée non couverte pour faire partie de ladite surface visible (3) de la pièce de garniture (1).

7. Procédé selon l'une quelconque des revendications 1 à 5, **caractérisé en ce que** l'insert pré-fabriqué (6) est au moins en partie caché à la vue en y fixant un élément de finition (27) de manière à couvrir l'insert (6).

8. Procédé selon la revendication 7, **caractérisé en ce que** ledit insert (6) et ledit élément de finition (27) comprennent mutuellement des moyens d'accouplement coopérant mutuellement permettant de fixer l'élément de finition (27) à l'insert (6) par de côté frontal de la pièce de garniture (1).

9. Procédé selon l'une quelconque des revendications 1 à 8, **caractérisé en ce que** l'insert pré-fabriqué (6) présente une face frontale (12) et est positionné dans le moule (9) avec cette face frontale (12) sensiblement aflleurante à la surface (8) de moule contre laquelle la peau (2) est moulée.

10. Procédé selon l'une quelconque des revendications 1 à 9, **caractérisé en ce que** l'insert pré-fabriqué (6) présente une face frontale (12) et est maintenu dans ledit moule (9) avec sa face frontale (12) à une distance derrière la surface (8) de moule contre laquelle la peau (2) est moulée de sorte que sa face frontale (12) est en retrait dans ladite surface visible formée par la peau (2), ledit matériau de peau fluide étant empêché de couvrir entièrement la face frontale (12) de l'insert (6), en particulier en positionnant l'insert (6) sur un bord vertical (13) ou sur une partie surélevée (23) de la surface (8) de moule de sorte que la peau (2) forme un évidement (24) devant l'insert (6).

11. Procédé selon les revendications 7 et 10, **caractérisé en ce que** ledit élément de finition (27) a une autre face frontale (28) et est inséré dans l'évidement (24) jusqu'à ce que cette autre face frontale (28) soit sensiblement affleurante à la surface visible (3) formée par la peau (2).

12. Procédé selon l'une quelconque des revendications 1 à 11, **caractérisé en ce que** ledit matériau de peau fluide est appliqué par pulvérisation contre la surface (8) de moule.

13. Procédé selon l'une quelconque des revendications 1 à 11, **caractérisé en ce que** ledit matériau de peau fluide est appliqué contre la surface (8) de moule en utilisant un moule fermé et en remplissant ce moule fermé avec ledit matériau de peau fluide soit par un procédé de versage soit par un procédé de moulage par injection-réaction.

14. Procédé selon l'une quelconque des revendications 1 à 13, **caractérisé en ce que** ladite peau (2) est réalisée en appliquant tout d'abord une couche de finition contre ladite surface de moule, en particulier une peinture appliquée dans le moule, et ensuite ledit matériau de peau fluide.

15. Procédé selon l'une quelconque des revendications 1 à 14, **caractérisé en ce que** ladite peau (2) a une épaisseur moyenne de l'ordre de 0,1 à 3 mm.
